# EUROPEAN PATENT APPLICATION

(11) **EP 2 921 691 A1**
(43) Date of publication of application: **23.09.2015**
(21) Application number: 15158644.3
(22) Date of filing: 21.07.2010
(51) Int. Cl.: F02M 61/16, F02M 51/06, F02M 57/06, F02M 61/18, F02M 61/12

(54) **Integrated fuel injector igniters with conductive cable assemblies**

(30) Priority: 27.08.2009 US 237425 P; 27.08.2009 US 237479 P; 27.08.2009 US 237466 P; 19.10.2009 US 581825; 07.12.2009 WO PCT/US2009/067044; 07.12.2009 US 653085; 13.02.2010 US 304403 P; 09.03.2010 US 312100 P
(62) Divisional of application: 10814120.1
(71) Applicant: McAlister Technologies, LLC, Phoenix, AZ 85016 (US)
(72) Inventor: McAlister, Roy E, Phoenix, Arizona 85050 (US)
(74) Representative: Beattie, Alex Thomas Stewart

(57) **Abstract**

The present disclosure is directed to a valve actuation assembly, with a valve (122), means for sensing (126), a cable (121), means for actuating the valve (122) by pulling on the cable (121) and a brush bearing. The cable (121) includes a brush bearing with bristles extending from the cable (121) to maintain the cable (121) at least generally centered within a channel as the cable moves in the channel. The bristles can be electrically conductive and can convey a voltage to an electrode pair near the valve to ionize at least a portion of the fuel to urge the fuel from the injector through the valve.

## Description

### CROSS-REFERENCE TO RELATED APPLICATIONS

The present application claims priority to and the benefit of U.S. Provisional Application No. 61/237,425, filed August 27, 2009 and titled OXYGENATED FUEL PRODUCTION; U.S. Provisional Application No. 61/237,466, filed August 27, 2009 and titled MULTIFUEL MULTIBURST; U.S. Provisional Application No. 61/237,479, filed August 27, 2009 and titled FULL SPECTRUM ENERGY; U.S. Patent Application No. 12/581,825, filed October 19, 2009 and titled MULTIFUEL STORAGE, METERING AND IGNITION SYSTEM; U.S. Patent Application No. 12/653,085, filed December 7, 2009 and titled INTEGRATED FUEL INJECTORS AND IGNITERS AND ASSOCIATED METHODS OF USE AND MANUFACTURE; PCT Application No. PCT/US09/67044, filed December 7, 2009 and titled INTEGRATED FUEL INJECTORS AND IGNITERS AND ASSOCIATED METHODS OF USE AND MANUFACTURE; U.S. Provisional Application No. 61/304,403, filed February 13, 2010 and titled FULL SPECTRUM ENERGY AND RESOURCE INDEPENDENCE; and U.S. Provisional Application No. 61/312,100, filed March 9, 2010 and titled SYSTEM AND METHOD FOR PROVIDING HIGH VOLTAGE RF SHIELDING, FOR EXAMPLE, FOR USE WITH A FUEL INJECTOR. Each of these applications is incorporated herein by reference in its entirety.

### TECHNICAL FIELD

The following disclosure relates generally to fiber optic and/or conductive cable assemblies and centering brush bearings and associated components for operating a fuel injection valve.

### BACKGROUND

Fuel injectors are used to inject fuel into a combustion chamber of a combustion engine. The fuel is generally pressurized and released into the combustion chamber at a specific time relative to a stroke of the engine when a valve is opened between a chamber containing the pressurized fuel and the combustion chamber. Recent advances in control technology have allowed great efficiency and power production gains from monitoring a combustion event, such as temperature, light, pressure, or movement within the combustion chamber. However, conventional fuel injection valves and combustion chambers are not equipped to monitor the combustion events, and in many existing engines can not easily be adapted for use with monitoring equipment. In many fuel injector configurations, the size of the bore through which the fuel injector enters the combustion chamber is small and limits the type of equipment that can be used to monitor the combustion event. Accordingly, there exists a need for an improved way to deliver fuel to a combustion chamber and to measure a combustion event within the chamber.

### BRIEF DESCRIPTION OF THE DRAWINGS

Figure 1 is a schematic cross-sectional side view of a fuel injector in accordance with an embodiment of the disclosure.
Figure 2A is an isometric view of a cable according to embodiments of the disclosure.
Figure 2B is a cross-sectional view of the cable of Figure 2A according to embodiments of the disclosure.
Figure 3A is an isometric view of a cable according to embodiments of the disclosure.
Figure 3B is a cross-sectional view of the cable of Figure 3A according to embodiments of the disclosure.
Figure 4A is an isometric view of a cable according to embodiments of the disclosure.
Figure 4B is a cross-sectional view of the cable of Figure 4A according to embodiments of the disclosure.
Figure 5 is a cross sectional view of a cable according to embodiments of the disclosure.
Figure 6 is a cross sectional view of a cable according to embodiments of the disclosure.
Figure 7 is a cross-sectional view of a cable according to embodiments of the disclosure.
Figure 8A is a length-wise cross-sectional view of a cable having a stop according to embodiments of the disclosure.
Figure 8B is a width-wise cross-sectional view of the cable of Figure 8A according to embodiments of the disclosure.
Figure 8C is a width-wise cross-sectional view of the cable of Figure 8A according to embodiments of the disclosure.

### DETAILED DESCRIPTION

The present application incorporates herein by reference in its entirety the subject matter of U.S. Patent Application No. 12/006,774 (now U.S. Patent No. 7,628,137), filed January 7, 2008 and titled MULTIFUEL STORAGE, METERING, AND IGNITION SYSTEM. The present application incorporates by reference in their entirety the subject matter of each of the following U.S. Patent Applications, filed concurrently herewith on July 21, 2010 and titled: INTEGRATED FUEL INJECTORS AND IGNITERS AND ASSOCIATED METHODS OF USE AND MANUFACTURE (Attorney Docket No. 69545-8031 US); FUEL INJECTOR ACTUATOR ASSEMBLIES AND ASSOCIATED METHODS OF USE AND MANUFACTURE (Attorney Docket No. 69545-8032US); SHAPING A FUEL CHARGE IN A COMBUSTION CHAMBER WITH MULTIPLE DRIVERS AND/OR IONIZATION CONTROL (Attorney Docket No. 69545-8034US); CERAMIC INSULATOR AND METHODS OF USE AND MANUFACTURE THEREOF (Attorney Docket No. 69545-8036US); METHOD AND SYSTEM OF THERMOCHEMICAL REGENERATION TO PROVIDE OXYGENATED FUEL, FOR EXAMPLE, WITH FUEL-COOLED FUEL INJECTORS (Attorney Docket No. 69545-8037US); and METHODS AND SYSTEMS FOR REDUCING THE FORMATION OF OXIDES OF NITROGEN DURING COMBUSTION IN ENGINES (Attorney Docket No. 69545-8038US).

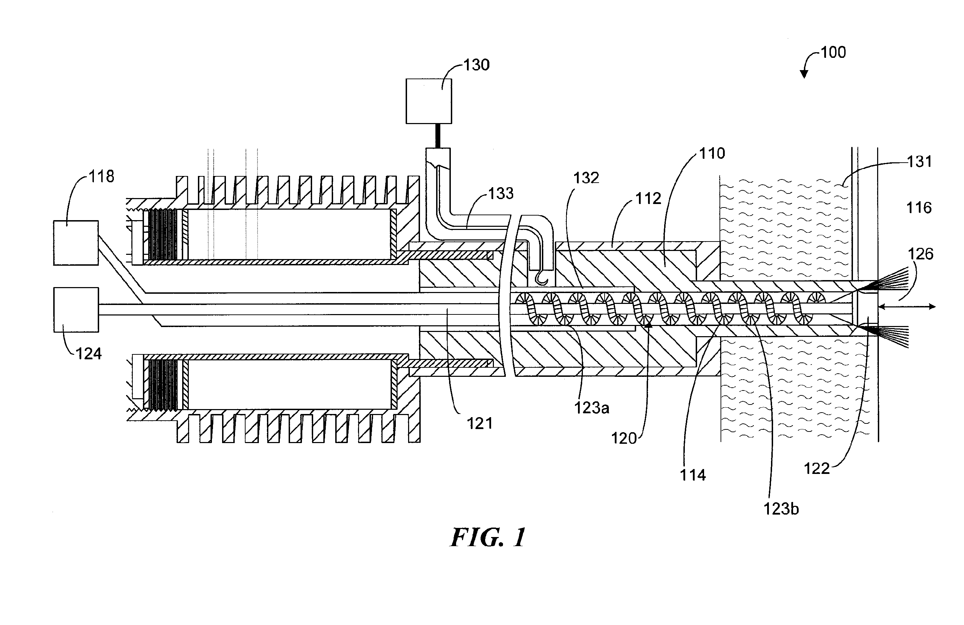

The present disclosure describes devices, systems, and methods for providing a fuel injector assembly including a fiber optic and/or electrically conductive cable and optical combustion measuring unit. The disclosure further describes a bearing comprising generally rigid bristles extending from the cable to maintain the cable within a channel of a fuel injector, as well as associated systems, assemblies, components, and methods. Certain details are set forth in the following description and in Figures 1-8C to provide a thorough understanding of various embodiments of the disclosure. However, other details describing well-known structures and systems often associated with internal combustion engines, injectors, igniters, and/or other aspects of combustion systems are not set forth below to avoid unnecessarily obscuring the description of various embodiments of the disclosure. Thus, it will be appreciated that several of the details set forth below are provided to describe the following embodiments in a manner sufficient to enable a person skilled in the relevant art to make and use the disclosed embodiments. Several of the details and advantages described below, however, may not be necessary to practice certain embodiments of the disclosure.

Many of the details, dimensions, angles, shapes, and other features shown in the Figures are merely illustrative of particular embodiments of the disclosure. Accordingly, other embodiments can have other details, dimensions, angles, and features without departing from the spirit or scope of the present disclosure. In addition, those of ordinary skill in the art will appreciate that further embodiments of the disclosure can be practiced without several of the details described below.

Reference throughout this specification to "one embodiment" or "an embodiment" means that a particular feature, structure, or characteristic described in connection with the embodiment is included in at least one embodiment of the present disclosure. Thus, the occurrences of the phrases "in one embodiment" or "in an embodiment" in various places throughout this specification are not necessarily all referring to the same embodiment. Furthermore, the particular features, structures, or characteristics may be combined in any suitable manner in one or more embodiments. The headings provided herein are for convenience only and do not interpret the scope or meaning of the claimed disclosure.

Figure 1 is a schematic cross-sectional side view of a fuel injector assembly 100 in accordance with several embodiments of the present disclosure. The assembly 100 includes a dielectric body 110 having a channel 114 extending longitudinally through the body 110. The channel 114 extends between a fuel combustion chamber 116 and a fuel reservoir 118 to carry fuel from the fuel reservoir 118 along the channel 114 and into the combustion chamber 116. The fuel injector assembly 100 can also include a housing 112 surrounding the body 110. The housing 112 can be an electro-magnetic shield or a mechanical reinforcement to strengthen the assembly 100. The housing 112 is optional, and can be included in applications where the additional strength and/or electrical shielding are advantageous. The assembly 100 can further include an electrically conductive cable assembly 120 contained in the channel 114 that can include a cable body 121 with a valve 122 at an end of the cable body 121 positioned between the channel 114 and the fuel combustion chamber 116. The assembly 100 can also include a valve actuator 124, such as a solenoid, a spring, or other actuator, that is connected to the cable body 121 and moves the valve 122 back and forth to actuate the valve 122 to inject fuel into the combustion chamber 116. The valve 112 can include a sensor 126, such as an optical head, that can detect a combustion event in the fuel combustion chamber 116 by detecting at least one of temperature, light, pressure, sound, or motion within the combustion chamber. The cable 120 can relay a signal representing the combustion event through the cable body 121.

The combustion chamber 116 contains a piston (not shown) that is driven by timed bursts of combusted fuel in the combustion chamber 116. The fuel injector assembly 100 is configured to deliver precisely timed quantities of fuel into the combustion chamber to mix with oxygen in the chamber. The piston can pressurize the fuel-oxygen mixture, and a sparkplug (or equivalent) ignites the fuel in the combustion chamber 116 to move the piston, which delivers power to a crankshaft (not shown). To assist fuel delivery, the assembly 100 can create a plasma by ionizing a portion of the fuel to force the fuel into the combustion chamber 116 quickly and efficiently. To create the plasma, an electrical current can be delivered from an ionizing power source 130 to electrodes in the channel 114. In some embodiments, the valve 122 and an engine section 131 near the valve 122 can operate as the electrodes. Further details of fuel injectors, combustion chambers, and related devices, techniques, and methods are given in U.S. Patent Application No. 12/653,085, which is incorporated herein by reference in its entirety.

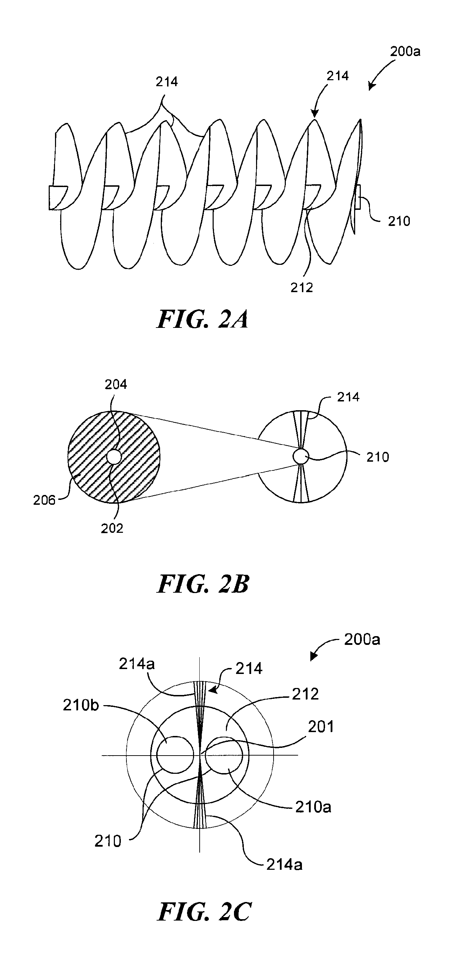

Figures 2A-7 illustrate various isometric and cross-sectional views of the cable body 121 according to several embodiments of the present disclosure. Figure 2A shows an isometric view of a cable 200a, and Figures 2B and 2C show cross-sectional views of the cable 200a. Figure 2B shows a single stem tube 210, including a fiber optic component 202, a cladding 204, and a sheath 206. The fiber optic component 202 can include multiple fiber optic cores, and can be arranged off-center relative to the stem tube 210 in various arrangements. The fiber optic component 202 can be made of any material that perpetuates an optical signal, such as silica, fluorozirconate, fluoroaluminate, chalcogenide glass, sapphire, or phosphate glass. The fiber optic component 202 can be adapted to transmit optical signals of different wavelengths and types. Also, the cladding 204 can be made of different materials and in various combinations with materials of the fiber optic core 202. The sheath 206 can be electrically conductive or electrically non-conductive, and can be load-bearing. In some embodiments, the sheath 206 can be omitted, and the fiber optic component 202 can be made of a relatively strong material such as fiber glass, polyimide, polyamide-imide, aluminum fluoride, quartz, and sapphire, and configured to withstand tensile forces caused in the stem tube 210 as the valve 122 is actuated.

The cable 200a can have multiple stem tubes 210, as shown in Figure 2C, extending along the cable 200a. An encasement 212 made of a plastic or other insulating material can surround the stem tubes 210 to protect the stem tubes 210 from the fuel flowing through the channel 114 (Figure 1) or any other environmental hazard that may damage the stem tubes 210. The encasement 212 can surround any group of the stem tubes 210, including a single stem tube 210. The encasement 212 is optional and can be omitted. In some embodiments, the cable 200a includes a brush bearing 214 having bristles 214a extending between the stem tubes 210 and extending radially from a central point 201 of the cable 200a. In some embodiments, the stem tubes 210 are twisted in a helical configuration, and therefore the bristles 214a can also form a helix around the center point 201. The brush bearing 214 can maintain the cable 200a at least generally centered within the channel 114 as the cable 200a is vibrated or moved longitudinally to actuate a valve or other device. The brush bearing 214 can provide a unidirectional bearing that maintains motion of the valve 122 (Figure 1) on a centerline of the channel 114 (Figure 1). The bearing 214 can also provide protection for the stem tubes in the channel 114. The bristles 214a can be made of carbon and/or copper filled carbon brushes similar to those utilized against the rotors of motors and generators.

The stem tubes 210 can be an electrically conductive optical strand that can withstand a tensile load caused when the cable 200a is used to actuate a valve or other device. For example, the stem tubes 210 can be made of a material, such as an aluminum fluoride, that operates as an optical waveguide, is electrically conductive, and has sufficient tensile strength to be used to actuate a fuel injection valve or other device. The cable 200a can accordingly be used to carry an optical signal from the sensor 126, to carry a voltage to the electrodes to cause the plasma in the fuel, and to actuate the valve 122. The voltage can be a DC voltage, or an AC voltage at an appropriate frequency, including a high-frequency. In some embodiments, the stem tubes 210 can have different combinations of these characteristics. For example, the cable 200a can include a first stem tube 210a that includes optical fibers for carrying an optical signal, and a second stem tube 210b that is a tensile member. Either of the first or second stem tubes 210a, 210b can also be electrically conductive in order to carry a voltage to an electrode pair to ionize a portion of the fuel. In some embodiments, the stem tubes 210 are both made of optical fibers having sufficient strength to withstand a tensile load caused by actuating the valve 122.

Twisting or braiding the conductive cable assembly diffuses the voltage across the cross-sectional area of the cable assembly and reduces problems associated with a phenomenon known as the "skin effect." At high-frequency, the electrical signal in a conductor tends to be carried primarily at the outermost portion, or skin, of the conductor. This phenomenon causes increased resistance because it reduces the effective cross-sectional area of the conductor, which is inversely related to the resistance of the conductor. The skin effect can be overcome by braiding or otherwise weaving wires in a litz array such that each wire in an array of wires alternates between the outside and inside of the wire at different portions of the wire. Generally, each wire is electrically isolated from the rest to prevent the wires from shorting together into a composite wire which also experiences the skin effect.

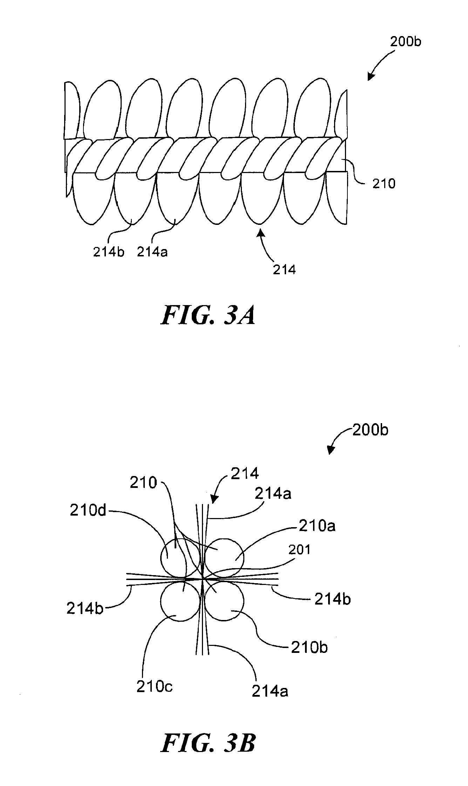

Figure 3A illustrates an isometric view of another cable 200b, and Figure 3B depicts a cross-sectional view of the cable 200b according to several embodiments of the present disclosure. The cable 200b can include four stem tubes 210 and a brush bearing 214 similar to the cable 200a shown in Figures 2A-2C. The brush bearing 214 can include a first section of bristles 214a and a second section of bristles 214b extending between the stem tubes 210 at an angle relative to the first section of bristles 214a. The strands can be wound, causing the two bristle sections to form a double-helix about a center point 201 shown in Figure 3B. The first bristles 214a and second bristles 214b can be made of the same material, or different materials.

In some embodiments, a first stem tube 210a can be an optical waveguide, a second stem tube 210b can be electrically conductive, and a third stem tube 210c can be a tensile member capable of withstanding a tensile load caused when the valve actuator 124 pulls on the cable 200b. Accordingly, the optical signal from the sensor 126 can be carried by the first stem tube 210a, the electricity for creating the plasma can be carried by the second stem tube 210b, and the tensile load can be carried by the third stem tube 210c. A fourth stem tube 210d can be an optical fiber, an electrical conductor, or a tensile member, or have any combination of these characteristics. In some embodiments, the stem tubes 210 can all have different combinations of these characteristics, as needed by a particular application, and according to design preferences. For example, a material with the optical, electrical, and mechanical properties may allow the cable 200b to have a smaller diameter, but may be more expensive than a material having only one or two of these properties but may increase the diameter of the cable 200b. Although the stem tubes 210 are shown here having a similar diameter, a given application may call for different stem tubes 210 to have different diameters.

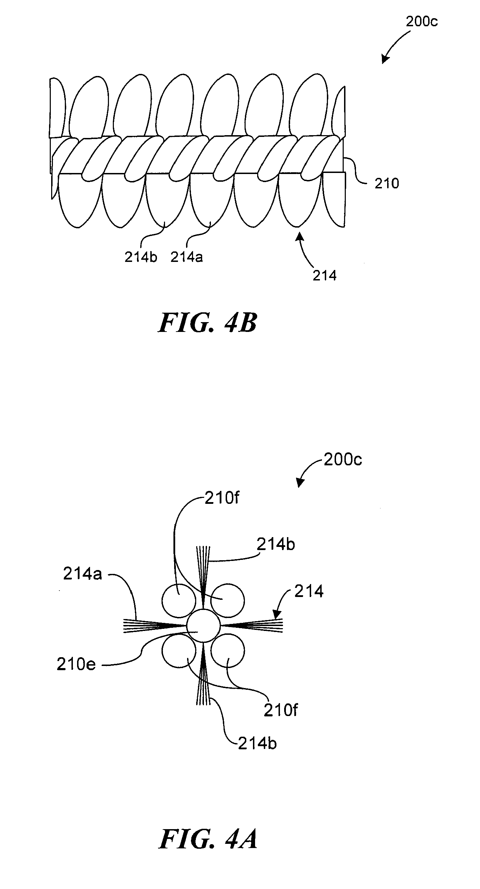

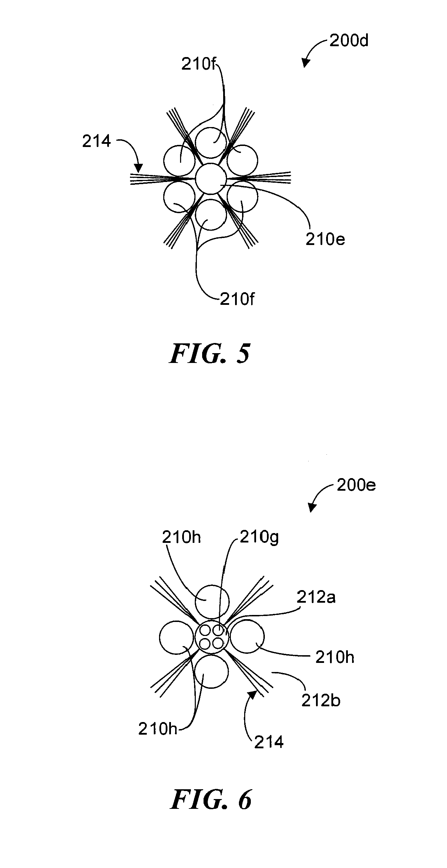

Figures 4A, 4B, and 5 show cables 200c and 200d, respectively, having alternative arrangements. Cables 200c and 200d include a central stem tube 210e and several peripheral stem tubes 210f. Many features of these cables 200c and 200d are generally similar to features of the cables 200a and 200b discussed above in Figures 2A-3B including a brush bearing 214. It is to be understood that various other configurations are possible, including various numbers and arrangements of the stem tubes 210 and bristles.

Figure 6 shows another cable 200e in which a first group of stem tubes 210g have a first diameter, and a second group of stem tubes 210h have a second, larger diameter. The cable 200e can include a first encasement 212a around the first group of stem tubes 210g and a second encasement 212b around the second group of stem tubes 210h. In some embodiments, the cable 200e does not include an encasement 212. Due to their larger size, the second group of stem tubes 210h can be tensile members, and the first group of stem tubes 210g can be the optical and/or electrical strands. In any configuration shown herein that includes at least one electrically conductive strand, the stem tubes 210 can be arranged in a litz array to mitigate the skin effect discussed above. The size, shape, and number of stem tubes 210 depends on many variables, and this disclosure is not limited to a specific arrangement or number of strands.

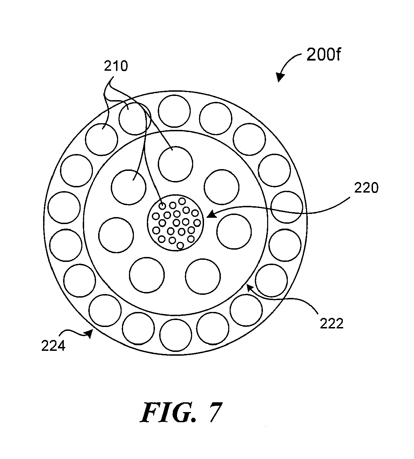

Figure 7 shows yet anther cable 200f including three groups of stem tubes 210. The cable 200f includes a first group 220 of stem tubes 210, a second group 222 of stem tubes 210 wound at least generally concentrically around the first group 220, and a third group 224 wound at least generally concentrically around the second group 222. In some embodiments, stem tubes 210 in the first group 220 contains optical fibers, stem tubes 210 in the second group 222 are electrically conductive, and stem tubes 210 in the third group 224 includes tensile members. The groups can be mechanically insulated such that a tensile force carried by the tensile members in the third group 224 does not translate to stem tubes 210 in the second group 222 or the first group 220. Similarly, stem tubes 210 in one group can be electrically and/or optically insulated from stem tubes 210 in other groups. In other embodiments, the third group can be omitted because the tensile load is carried by stem tubes 210 in the first group 220 or in the second group 222. Each group can include a plurality of stem tubes 210, which can be braided or woven in a litz array to mitigate the skin effect in the cable 200f. In some embodiments, the electrically conductive portions of cable 200f are used to transmit a DC voltage. Accordingly, a single stem tube 210 can be used, or the stem tubes 210 can be unbraided, because the skin effect generally is not present with a DC voltage. The embodiments shown in Figure 7 may include bristles (not shown) similar to embodiments shown and described above with reference to Figures 2-6.

Referring back to Figure 1, the channel 114 can include an electrically conductive sleeve 132 connected to a power source 130 through a wire 133. The sleeve 132 can be stationary relative to the body 110 while the cable body 121 moves back and forth in the channel 114 as the valve 122 is actuated. A first portion of the bristles 123a can be electrically conductive to form an electrical path between the power source 130 and the electrodes 122, 131. The conductive bristles 123a can overlap with the sleeve 132 sufficiently that the bristles 123a contact the sleeve 132 through the stroke of the cable body 121 from the closed position to the open position. The voltage can be applied through the bristles 123a and can be further carried by the cable body 121 between the conductive bristles 123a and the valve 122. In some embodiments, a second portion of the bristles 123b that does not contact the sleeve 132 is not necessarily part of the electrical path between the valve 112 and the ionizing power source 130. Accordingly, the bristles 123b can be chosen of a material to reduce friction and not necessarily for their electrical properties. For example, the bristles 123b can be made of a non-conductive nylon or a polyamide-imide. To mitigate wear in the channel 114, the channel 114 can be lined with a plating or liner made of an alloy similar to the material disclosed in U.S. Patent 4,742,265, which is incorporated herein by reference. This arrangement allows the wire 133 to remain stationary while the cable 120 moves to avoid fatigue in the wire 133. Also, the stroke of the cable 120 between open and closed can be much larger than other designs because the wire 133 does not experience fatigue caused by moving with the wire 133. A larger stroke allows the assembly 100 to be used in large engines that call for a relatively large quantity of fuel to be injected into the combustion chamber 116, such as large ships and construction equipment, etc.

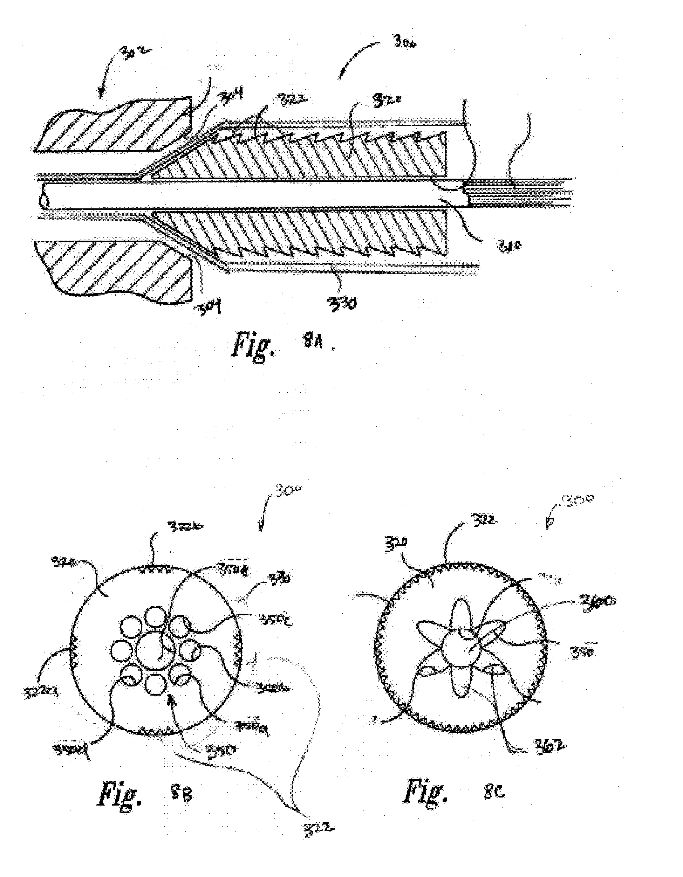

Figures 8A-8C illustrate other embodiments of the present disclosure. Figure 8A shows a cross-sectional view of a cable assembly 300 and an actuator 302. The cable assembly 300 includes a center cable section 310, a stop 320 around a portion of the center cable section 310, and an outer cable section 330 layered at least generally concentrically with the stop 320 and the center cable section 310. The cable assembly 300 is situated within the actuator 302 which actuates the cable assembly 300. The actuator 302 can include a solenoid, a magnet, a spring, or any other equivalent device to actuate the cable assembly 300. The actuator 302 can be generally similar to the actuator 124 shown in Figure 1. The actuator 302 can include a shoulder 304 against which the cable assembly 300 abuts to limit the range of motion of the cable assembly 300 relative to the actuator 302. The shoulder 304 can be sloped to at least generally match a slope of the stop 320 to provide a large contact area to distribute pressure caused when the actuator 302 pulls the cable assembly 300 into the actuator 302. In some embodiments, the shoulder 304 is not part of the physical housing of the actuator 302, and is a separate piece, such as a collar, that has sufficient rigidity to withstand the actuating force from the actuator 302. Limiting the motion of the cable assembly 300, and a valve (or other equipment) at an end of the cable assembly 300, allows for the valve to be opened a precise, consistent distance each time the cable assembly 300 is actuated.

The stop 320 can be fixed to the central cable section 310, and can include barbs 322 on an outer surface contacting the outer cable section 330. The barbs 322 fix the outer cable section 330 to the stop 320 so that when the actuator 302 actuates the cable assembly 300, the stop 320 abuts the shoulder 304 and stops the cable assembly 300 from moving relative to the shoulder 304. In some embodiments, the barbs 322 are directional. For example, as shown in Figure 8A, the barbs 322 are directed away from the actuator 302. In other embodiments the barbs 322 are not directional. The stop 320 can include an adhesive or other techniques to prevent the stop 320 from moving relative to the central cable section 310 and the outer cable section 330. The stop 320 can be made of a dielectric material, or an electrically conductive material. The stop 320 can be at least generally rigid and withstand the compressive forces caused by the actuator 302 when the stop 320 is pressed against the shoulder 304. The stop 320 also adds section stiffness to the able assembly. Accordingly, the inner and outer cable section s 310, 330 can be made of a generally flexible material because the stop 320 provides a measure of rigidity at least portions of the cable assembly 300. In portions where additional stiffness is desired, various thermoplastic or thermoset polymers may be used to stiffen and/or reduce the surface energy and/or to provide a smooth surface to reduce sliding friction between the outer cable section 330 and a channel.

The central cable section 310 and the outer cable section 330 can each contain stem tubes generally as described above with respect to Figures 2-7. In some embodiments, the outer cable section 330 includes tensile members, and the central cable section 310 includes fiber optics and electrically conductive stem tubes, or a combination of fiber optic components and electrically conductive sheaths. Virtually any combination and arrangement of stem tubes is possible. Figure 8B illustrates a cross-sectional view of a cable assembly 300 as shown in Figure 8A. The cable assembly 300 includes a plurality of stem tubes 350, a stop 320, and barbs 322. (The outer cable section 330 is not shown.) The stem tubes 350 can include fiber optic components, electrically conductive components, and tensile members in any combination and arrangement. For example, a first stem tube 350a can be an optical fiber, a second stem tube 350b can be an optical fiber having an electrically conductive sheath, a third stem tube 350c can be a tensile member that is not necessarily electrically or optically conductive, and a fourth stem tube 350d can be and electrically conductive tensile member. The stem tubes 350 can be wound in a litz array to mitigate the "skin effect" that can occur when the cable assembly 300 is used to transmit high frequency, AC voltages. The stem tubes 350 can also include one or more stem tubes 350e at a center of the cable assembly 300. In some embodiments, some of the stem tubes 350 can carry optical signals of a first wavelength, while another group of the stem tubes 350 carries optical signals of a second wavelength. For example, stem tube 350a can carry light in the visible spectrum; stem tube 350b can carry an infrared signal; and stem tube 350c can carry an ultraviolet signal. Other combinations are possible. The stem tubes 350 that are electrically conductive can also have differing characteristics. For example, a group of stem tubes 350 can be used with a high-frequency AC voltage and can accordingly be arranged in a litz array, while another group of stem tubes 350 is used with a DC voltage, and therefore need not be braided or woven in a litz array. The cable assembly 300 can also include bristles (not shown) similar to those shown above with reference to Figures 2-7. The bristles can be positioned at a different location along the cable assembly 300 than the stop 320 to avoid interfering with the stop 320.

The barbs 322 are shown in Figure 8B at four, cardinal directions around the circumference of the stop 320. In other embodiments, the barbs 322 are arranged continuously around the circumference of the cable assembly 300, or in a different distribution. Different applications may call for more or less force from the actuator 302 (Figure 8A), and accordingly, the barbs 322 can be adjusted to withstand an appropriate amount of force.

Figure 8C illustrates another embodiment of a cable assembly 300 including a central stem tube 360, several peripheral stem tubes 362, a stop, and barbs 322 on the stop. The central stem tube 360 can be an optical fiber, or include an optical fiber within a sheath. The peripheral stem tubes 362 have a non-circular cross-sectional shape. The peripheral stem tubes 362 can be electrically conductive, and they may be tensile members capable of withstanding a tensile load placed on the cable assembly 300 by an actuator. Figure 8C shows six peripheral stem tubes 362, but other embodiments can include more or fewer peripheral stem tubes 362. Various other configurations and cross-sectional shapes are possible.

It will be apparent that various changes and modifications can be made without departing from the scope of the disclosure. For example, the number, layout, and materials of the stem tubes 210 may be altered to include alternative materials and processing means. The assembly 100 may include alternative configurations than those shown and described and still be within the spirit of the disclosure.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number, respectively. When the claims use the word "or" in reference to a list of two or more items, that word covers all of the following interpretations of the word: any of the items in the list, all of the items in the list, and any combination of the items in the list.

The various embodiments described above can be combined to provide further embodiments. All of the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the disclosure can be modified, if necessary, to employ fuel injectors and ignition devices with various configurations, and concepts of the various patents, applications, and publications to provide yet further embodiments of the disclosure.

These and other changes can be made to the disclosure in light of the above-detailed description. In general, in the following claims, the terms used should not be construed to limit the disclosure to the specific embodiments disclosed in the specification and the claims, but should be construed to include all systems and methods that operate in accordance with the claims. Accordingly, the invention is not limited by the disclosure, but instead its scope is to be determined broadly by the following claims.

### PREFERRED FEATURES OF THE INVENTION

[c1] 1. A cable assembly, comprising:
   a stem tube having a first end and a second end, the stem tube including an optical fiber and an electrically conductive sheath;
   electrically conductive bristles extending from the stem tube and configured to maintain the stem tube at least generally aligned within a channel;
   a first electrode connected to the first end, the first electrode being positioned near a second electrode and configured to deliver an ionizing voltage between the first and second electrodes;
   a sensor at the first end of the stem tube configured to detect at least one of pressure, temperature, light, or movement and to relay an associated signal along the optical fiber; and
   a cable actuator connected to the second end of the cable and configured to actuate the stem tube by tensioning the stem tube.
[c2] 2. The cable assembly of clause 1 wherein the channel is within a fuel injector adjacent to a combustion chamber, and the sensor is configured to detect a combustion event in the combustion chamber.
[c3] 3. The cable assembly of clause 1, further comprising a tensile member extending along the stem tube and configured to bear a tensile load caused when the cable actuator tensions the stem tube.
[c4] 4. The cable assembly of clause 1 wherein the optical fiber is configured to bear a tensile load caused when the cable actuator actuates the fuel injector by pulling the cable.
[c5] 5 The cable assembly of clause 1 wherein the stem tube comprises a plurality of stem tubes arranged in a litz array, wherein the litz array is a braided configuration configured to deliver the voltage to the electrode pair.
[c6] 6. The cable assembly of clause 1 wherein the bristles are generally rigid and maintain the cable generally centered within the channel.
[c7] 7. The cable assembly of clause 1 wherein the cable further comprises electrically conductive strands arranged concentrically around the optical fibers and configured to deliver the voltage to the electrode pair.
[c8] 8. The cable assembly of clause 1 wherein the voltage comprises an AC voltage.
[c9] 9. The cable assembly of clause 1 wherein the voltage comprises a DC voltage.
[c10] 10. The cable assembly of clause 1 wherein the bristles are configured to maintain the cable at least generally centered within the channel.
[c11] 11. The cable assembly of clause 1 wherein the bristles are wound around the cable in a helix or a double helix.
[d2] 12. The cable assembly of clause 1, further comprising an electrically conductive sleeve lining at least a portion of the channel, wherein at least a portion of the bristles are electrically conductive and form part of an electrical path for the voltage between the electrically conductive sleeve and the electrode pair.
[c13] 13. The cable assembly of clause 12 wherein the electrically conductive sleeve lines a first portion of the channel but not a second portion of the channel, and wherein bristles that contact the second portion of the channel are not electrically conductive and have low friction between the channel and the bristles.
[c14] 14. The cable assembly of clause 13 wherein the cable moves between a first position when the valve is closed and a second position when the valve is open, and wherein the conductive sleeve contacts at least a portion of the electrically conductive bristles at both the first position and the second position.
[c15] 15. The cable assembly of clause 12, further comprising an electrical lead configured to deliver the voltage to the electrically conductive sleeve, wherein the electrical lead remains stationary relative to the electrically conductive sleeve as the cable moves between the first position and the second position.
[c16] 16. The cable assembly of clause 1 wherein the stem tube comprises a plurality of stem tubes arranged into a group of central stem tubes and a group of outer stem tubes, the cable assembly further comprising a stop fixed to the central stem tubes and to the outer stem tubes, wherein the stop is between the central stem tubes and the outer stem tubes, and wherein the stop is configured to limit the movement of the cable assembly within the channel.
**[c17]** 17. The cable assembly of clause 1 further comprising a stop fixed to the stem tube and configured to engage a shoulder that is fixed relative to the channel, wherein the stop is configured to limit a range of motion of the cable assembly within the channel.
[c18] 18. A fuel injector, comprising:
   a dielectric body with a channel extending between a fuel reservoir and a fuel combustion chamber;
   a cable assembly positioned within the channel, the cable assembly
      including-
      an optical fiber,
      an electrically conductive strand, and
      a plurality of generally rigid filaments extending radially from the optical fiber and the electrically conductive strand and contacting the dielectric body to maintain the cable generally centered within the channel;
   a valve operably coupled to the cable and positioned between the channel and the fuel combustion chamber;
   a valve actuator connected to the cable and configured to move the cable in the channel to actuate the valve and permit fuel to enter the fuel combustion chamber from the channel;
   a sensor positioned on the valve and configured to detect a combustion event in the fuel combustion chamber, wherein the sensor is connected to at least one of the first and second bundles and configured to relay a signal along the optical fibers to report the combustion event.
[c19] 19. The fuel injector of clause 18, further comprising an electrically conductive lining in a portion of the channel, wherein at least a portion of the filaments are electrically conductive and contact the electrically conductive lining.
[c20] 20. The fuel injector of clause 19, further comprising an electrical lead contacting the electrically conductive lining, wherein the electrical lead, the electrically conductive lining, the electrically conductive filaments, and the valve form an electrical path through which electricity is delivered to form a plasma in the channel to deliver the fuel into the fuel combustion chamber.
[c21] 21. The fuel injector of clause 18 wherein the optical fiber and the electrically conductive strand are wound such that the filaments form a helix around the cable.
[c22] 22. The fuel injector of clause 18 wherein at least one of the optical fiber and the conductive strand is configured to bear a tensile load in the cable caused by the valve actuator.
[c23] 23. The fuel injector of clause 18 wherein at least one of the optical fiber and the conductive strand comprises a plurality of stem tubes arranged in a braided litz array.
[c24] 24. A valve actuation mechanism, comprising
   a valve;
   means for sensing at least one of heat, light, pressure, or motion, the means for sensing being positioned at the valve;
   a cable connected to the valve, the cable being configured to-sense at least one of heat, pressure, and motion opposite the valve, carry an optical signal from the means from sensing to a controller, and conduct electricity along the cable;
   means for actuating the valve by pulling on the cable to move the valve between a closed position to an open position;
   a brush bearing comprising a plurality of bristles protruding from the cable to maintain the cable at least generally centered within a bore, wherein the brush bearing permits the cable to move between the open position and the closed position within the bore.
[c25] 25. The valve actuation mechanism of clause 24 wherein the cable comprises at least one optical fiber configured to-withstand tensile forces caused by the means for actuating the valve; and carry an optical signal from the means for sensing.
[c26] 26. The valve actuation mechanism of clause 24 wherein the optical fiber comprises an optical core and an electrically conductive sheath surrounding the optical core.
[c27] 27. The valve actuation mechanism of clause 25 wherein the optical fiber is made of at least one of fiber glass, polyimide, polyamide-imide, aluminum fluoride, quartz, and sapphire.
[c28] 28. The valve actuation mechanism of clause 24 wherein the cable comprises-
   an optical fiber configured to carry the optical signal; and
   an electrically conductive strand configured to conduct electricity along the cable and to bear a tensile load caused by the means for actuating.
[c29] 29. The valve actuation mechanism of clause 24 wherein the valve comprises a valve for a fuel injector, and the means for sensing comprises means for detecting a combustion event through the valve.
[c30] 30. The valve actuation mechanism of clause 24, further comprising means for biasing the valve toward at least one of the open position and the closed position.
[c31] 31. The valve actuation mechanism of clause 24 wherein the cable comprises a plurality of strands arranged in a litz array.
[c32] 32. The valve actuation mechanism of clause 24 wherein the cable comprises a plurality of concentric layers of strands.
[c33] 33. The valve actuation mechanism of clause 24 wherein at least a portion of the bristles and at least a portion of the bore are electrically conductive.
[c34] 34. The valve actuation mechanism of clause 24 wherein the cable comprises at least two bundles, and the bristles of the brush bearing extend between the bundles.
[c35] 35. A method of manufacturing a litz wire, comprising:
   forming a litz wire from a plurality of stem tubes, the stem tubes individually including an optical core and an electrically conductive sheath surrounding the optical core;
   forming a brush bearing in the litz wire having bristles extending transversely to the litz wire;
   attaching a valve to a first end of the litz wire;
   attaching a sensor to the valve, wherein the sensor is coupled to the optical fibers to convey an optical signal from the sensor along the fibers;
   coupling the litz wire to a valve actuator; and
   positioning the litz wire in a channel of a housing with the valve being configured to actuate to inject a fluid from the housing when the valve actuator actuates the valve, wherein the brush bearing is configured to bear the litz wire at least generally centered within the channel.
[c36] 36. The method of clause 35 wherein forming the litz wire comprises braiding the plurality of stem tubes, and wherein forming the brush bearing comprises weaving the bristles within the litz wire.
[c37] 37. The method of clause 35, further comprising coupling the litz wire to an ionizing source and an electrode pair, wherein the ionizing power source is configured to deliver a voltage along the litz wire and ionize at least a portion of the fluid.
[c38] 38. The method of clause 35 wherein forming the brush bearing comprises forming the bristles into a helix around the litz wire.

## Claims

1. A valve actuation mechanism, comprising
a valve;
means for sensing at least one of heat, light, pressure, or motion, the means for sensing being positioned at the valve;
a cable connected to the valve, the cable being configured to-sense at least one of heat, pressure, and motion opposite the valve,
carry an optical signal from the means from sensing to a controller, and conduct electricity along the cable;
means for actuating the valve by pulling on the cable to move the valve between a closed position to an open position;
a brush bearing comprising a plurality of bristles protruding from the cable to maintain the cable at least generally centered within a bore, wherein the brush bearing permits the cable to move between the open position and the closed position within the bore.

2. The valve actuation mechanism of claim 1 wherein the cable comprises at least one optical fiber configured to-
withstand tensile forces caused by the means for actuating the valve; and carry an optical signal from the means for sensing.

3. The valve actuation mechanism of claim 2 wherein the optical fiber comprises an optical core and an electrically conductive sheath surrounding the optical core.

4. The valve actuation mechanism of claim 2 or 3 wherein the optical fiber is made of at least one of fiber glass, polyimide, polyamide-imide, aluminum fluoride, quartz, and sapphire.

5. The valve actuation mechanism of claim 1 wherein the cable comprises-
an optical fiber configured to carry the optical signal; and
an electrically conductive strand configured to conduct electricity along the cable and to bear a tensile load caused by the means for actuating.

6. The valve actuation mechanism of any preceding claim wherein the valve comprises a valve for a fuel injector, and the means for sensing comprises means for detecting a combustion event through the valve.

7. The valve actuation mechanism of any preceding claim, further comprising means for biasing the valve toward at least one of the open position and the closed position.

8. The valve actuation mechanism of any preceding claim wherein the cable comprises a plurality of strands arranged in a litz array.

9. The valve actuation mechanism of any one of claims 1 to 7 wherein the cable comprises a plurality of concentric layers of strands.

10. The valve actuation mechanism of any preceding claim wherein at least a portion of the bristles and at least a portion of the bore are electrically conductive.

11. The valve actuation mechanism of any preceding claim wherein the cable comprises at least two bundles, and the bristles of the brush bearing extend between the bundles.
